# EUROPEAN PATENT SPECIFICATION

(11) **EP 4 156 448 B1**
(45) Date of publication and mention of the grant of the patent: **15.11.2023**
(21) Application number: 22191696.8
(22) Date of filing: 23.08.2022
(51) Int. Cl.: H02J 7/00

(54) **STORAGE BATTERY CONTROL DEVICE, POWER STORAGE SYSTEM, AND STORAGE BATTERY CONTROL METHOD**
SPEICHERBATTERIESTEUERUNGSVORRICHTUNG, ENERGIESPEICHERSYSTEM UND SPEICHERBATTERIESTEUERUNGSVERFAHREN
DISPOSITIF DE COMMANDE DE BATTERIE DE STOCKAGE, SYSTÈME DE STOCKAGE D'ÉNERGIE ET PROCÉDÉ DE COMMANDE DE BATTERIE DE STOCKAGE

(30) Priority: 24.08.2021 JP 2021136238
(43) Date of publication of application: 29.03.2023
(73) Proprietor: Yazaki Corporation, Tokyo (JP)
(72) Inventor: Ono, Chihiro, Susono-shi, Shizuoka, 410-1194 (JP); Syouda, Takahiro, Susono-shi, Shizuoka, 410-1194 (JP)
(74) Representative: Grünecker Patent- und Rechtsanwälte PartG mbB

(56) References cited:
- EP-A1- 3 859 936
- WO-A1-2013/015162
- US-A1- 2014 021 923

## Description

### TECHNICAL FIELD

The present disclosure relates to a storage battery control device, a power storage system, and a storage battery control method.

### BACKGROUND ART

As a system for controlling discharge of a battery device in which a plurality of batteries are connected in series, there is known a system in which a battery to be avoided from being discharged is selected based on a state of each battery, the battery to be avoided from being discharged is bypassed, and the other batteries are discharged (for example, see JP2013-031247A). In the system described in JP2013-031247A, a cut-off switch for connecting and cutting off the batteries to and from each other and a bypass switch for connecting and cutting off a bypass line are provided.

In the above system, when a battery to be avoided from being charged and discharged is selected and the battery to be avoided from being charged and discharged is bypassed, for the purpose of preventing a short circuit, ON/OFF switching is performed from a state before the bypass in which the cut-off switch is turned on and the bypass switch is turned off to a state after the bypass in which the cut-off switch is turned off, and the bypass switch is turned on, via a state in which both switches are turned off. Therefore, when the battery is discharged to a load such as a driving motor at a timing of bypass switching of a storage battery, the load instantaneously stops. In addition, when the battery is charged with regenerative electric power of the driving motor at the timing of the bypass switching of the storage battery, regeneration invalidation occurs instantaneously.

### SUMMARY OF INVENTION

The present disclosure provides a storage battery control device, a power storage system, and a storage battery control method capable of preventing unintended instantaneous power failure of a load or regeneration invalidation at a timing of bypass switching of a storage battery.

A storage battery control device that controls a power storage system includes a plurality of storage batteries connected in series with a load or a power generation unit, a bypass unit configured to bypass the storage battery, a current sensor configured to detect a current value of the load or the power generation unit, and a control device. The control device is configured to execute: a first detection process of, during a first discharge period in which a voltage value or a state of charge of the storage battery at discharge is equal to or less than a first discharge threshold value, detecting a zero current state in which the current value detected by the current sensor becomes zero, and a first bypass process of, in response to detecting the zero current state in the first detection process, bypassing a storage battery having a voltage value or a state of charge equal to or less than the first discharge threshold value by the bypass unit; or a second detection process of, during a first charge period in which a voltage value or a state of charge of the storage battery at charge is equal to or greater than a first charge threshold value, detecting the zero current state, and a second bypass process of, in response to detecting the zero current state in the second detection process, bypassing a storage battery having a voltage value or a state of charge equal to or greater than the first charge threshold value by the bypass unit.

A power storage system includes: a plurality of storage batteries connected in series with a load and a power generation unit; a bypass unit configured to bypasses the storage battery; a current sensor configured to detect a current value of the load and the power generation unit; and the above storage battery control device.

A storage battery control method controls, using a computer, a power storage system including a plurality of storage batteries connected in series with a load or a power generation unit, a bypass unit configured to bypass the storage battery, a current sensor configured to detect a current value of the load or the power generation unit, and a control device, the storage battery control method including: during a period in which a voltage value or a state of charge of the storage battery at discharge is equal to or less than a predetermined discharge threshold value, a first detection process of detecting a zero current state in which the current value detected by the current sensor becomes zero, and a first bypass process of, in response to detecting the zero current state in the first detection process, bypassing a storage battery having a voltage value or a state of charge equal to or less than the predetermined discharge threshold value by the bypass unit; or during a period in which a voltage value or a state of charge of the storage battery at charge is equal to or greater than a predetermined charge threshold value, a second detection process of detecting the zero current state, and a second bypass process of, in response to detecting the zero current state in the second detection process, bypassing a storage battery having a voltage value or a state of charge equal to or greater than the predetermined charge threshold value by the bypass unit.

### BRIEF DESCRIPTION OF DRAWINGS

Fig. 1 is a diagram schematically showing a power storage system including a control device according to an embodiment of the present disclosure.
Fig. 2 is a block diagram showing functions of the control device shown in Fig. 1.
Figs. 3A to 3D are timing charts illustrating a bypass control of a bypass control unit shown in Fig. 2.
Fig. 4 is a flowchart illustrating a discharge control by the control device shown in Fig. 2.
Fig. 5 is a flowchart illustrating a charge control by the control device shown in Fig. 2.

### DESCRIPTION OF EMBODIMENTS

Hereinafter, the present disclosure will be described along a preferred embodiment. The present disclosure is not limited to the embodiment described below, and the embodiment can be appropriately modified within the limit of the appended claims. In addition, in the embodiment described below, although illustration and description of a part of the configuration are omitted, a publicly known or well-known technique is appropriately applied to the details of the omitted technique within a range in which there is no contradiction with the contents described below.

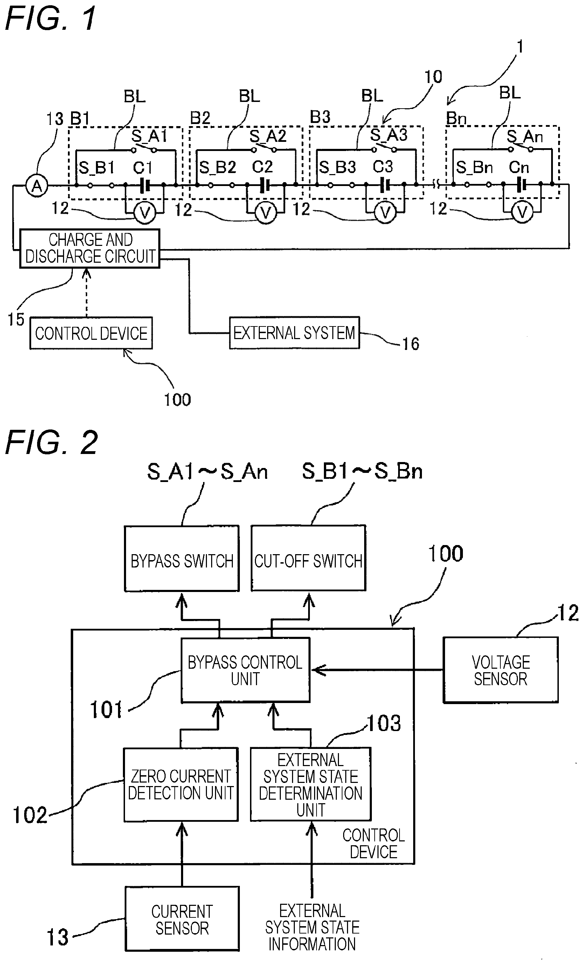

Fig. 1 is a diagram schematically showing a power storage system 1 including a control device 100 according to an embodiment of the present disclosure. As shown in Fig. 1, the power storage system 1 includes n (n is an integer of 2 or more) storage batteries C1 to Cn connected in series, n bypass circuits B1 to Bn, n voltage sensors 12, a current sensor 13, a charge and discharge circuit 15, and the control device 100. The power storage system 1 is an in-vehicle or stationary power supply.

The storage batteries C1 to Cn are storage battery cells, or storage battery modules or storage battery packs to which a plurality of storage battery cells are connected. The storage batteries C1 to Cn are secondary batteries such as lithium ion batteries and lithium ion capacitors. Although not particularly limited, the storage batteries C1 to Cn according to the present embodiment are regenerated from used batteries used in vehicles or the like, and there is a difference in a degree of deterioration of the storage batteries C1 to Cn. When the storage batteries C1 to Cn are combined to form the power storage system 10, deterioration states of the storage batteries C1 to Cn are measured and the storage batteries are selected according to battery capacities, and then the storage batteries C1 to Cn are combined so that a total capacity of the power storage system 1 satisfies a required capacity. It is not necessary to make deterioration degrees of the storage batteries C1 to Cn of the power storage system 10 equal to each other, and it is sufficient that the total capacity of the power storage system 10 satisfies the requirements of the power storage system 1.

Each of the storage batteries C1 to Cn is charged by being supplied with electric power from an external system 16 through the charge and discharge circuit 15, and discharges the charged electric power to supply the electric power to the external system 16. Here, the external system 16 includes a load, a generator, and the like. When the power storage system 1 is used in a vehicle, a driving motor, an air conditioner, various in-vehicle electrical components, and the like serve as loads. The driving motor serves as a load and also serves as a generator. In addition, when the power storage system 1 is stationary, home appliances in the home, a commercial power supply system, a liquid crystal display, a communication module, and the like serve as loads, and a photovoltaic power generation system and the like serve as a generator.

The bypass circuits B1 to Bn are provided corresponding to the storage batteries C1 to Cn, respectively. The bypass circuits B1 to Bn includes bypass lines BL, bypass switches S_A1 to S_An, and cut-off switches S_B1 to S_Bn, respectively. The bypass lines BL are respectively electric power lines that bypass the storage batteries C1 to Cn. The bypass switches S_A1 to S_An are respectively provided on the bypass lines BL. The bypass switches S_A1 to S_An are, for example, mechanical switches. The cut-off switches S_B1 to S_Bn are respectively provided between positive electrodes of the storage batteries C1 to Cn and one ends of the bypass lines BL. The cut-off switches S_B1 to S_Bn are, for example, semiconductor switches.

The storage battery C1 at a starting end is connected to the external system 16 such as a load via the charge and discharge circuit 15, and the storage battery Cn at a terminal end is also connected to the external system 16 such as a load. When the bypass switches S_A1 to S_An are turned off and the cut-off switches S_B1 to S_Bn are turned on in all the bypass circuits B1 to Bn of the power storage system 10, all the storage batteries C1 to Cn of the power storage system 10 are connected in series to the charge and discharge circuit 15 and the external system 16 such as a load. On the other hand, when a cut-off switch S_Bx is turned off and a bypass switch S_Ax is turned on in any bypass circuit Bx of the power storage system 10, a storage battery Cx corresponding to the bypass circuit Bx is bypassed, in which x is any of 1 to n.

The power storage system 10 includes the n voltage sensors 12 and the current sensor 13. The voltage sensor 12 is connected between the positive and negative terminals of each of the storage batteries C1 to Cn, and measures an inter-terminal voltage of the corresponding storage battery. In addition, the current sensor 13 is provided at the starting end of the power storage system 10, and measures a charge and discharge current of the power storage system 10, that is, a current flowing between the power storage system 10 and the external system 16.

Fig. 2 is a block diagram showing functions of the control device 100 shown in Fig. 1. As shown in Fig. 2, the control device 100 includes a bypass control unit 101, a zero current detection unit 102, and an external system state determination unit 103.

The bypass control unit 101 controls ON/OFF switching of the bypass switch S_Ax and the cut-off switch S_Bx of each bypass circuit Bx. The bypass control unit 101 controls the ON/OFF switching from a connection state in which the bypass switch S_Ax is turned off and the cut-off switch S_Bx is turned on to a bypass state in which the bypass switch S_Ax is turned on and the cut-off switch S_Bx is turned off, via a state in which both switches are turned off.

The zero current detection unit 102 detects the presence or absence of a zero current state in which a current value measured by the current sensor 13 during a bypass required period to be described later becomes zero. As the zero current state, for example, when the power running and regeneration of the external system 16 are switched in an electric vehicle, a state in which a discharge current from the power storage system 10 to the external system 16 is zero or a charge current from the external system 16 to the power storage system 10 is zero can be exemplified.

The external system state determination unit 103 determines whether an operating state of the external system 16 is a predetermined operating state based on external system state information output from a driving control device or the like of the electric vehicle. As the external system state information, a required output and a required torque of the driving motor as a load of the electric vehicle, and necessity of continuing an output of an electric pump for a brake as the load of the electric vehicle can be exemplified. In addition, as the predetermined operating state of the external system 16, an operating state in which a large torque is required for the driving motor of the electric vehicle as a load in a transient state, such as when starting, accelerating, or steeply climbing a slope, can be exemplified. Further, as the predetermined operating state of the external system 16, a state in which the electric pump for a brake of the electric vehicle as a load is required to continue to output a pump pressure in order to maintain the brake, when the electric vehicle operates in a hill assist mode or a brake auto hold mode, can be exemplified.

The bypass control unit 101 executes the bypass controls of the storage batteries C1 to Cn according to voltage values of the storage batteries C1 to Cn measured by the voltage sensors 12, the presence or absence of the detection of the zero current state by the zero current detection unit 102, and a determination result of the state of the external system 16 by the external system state determination unit 103. Hereinafter, the bypass control by the bypass control unit 101 will be described.

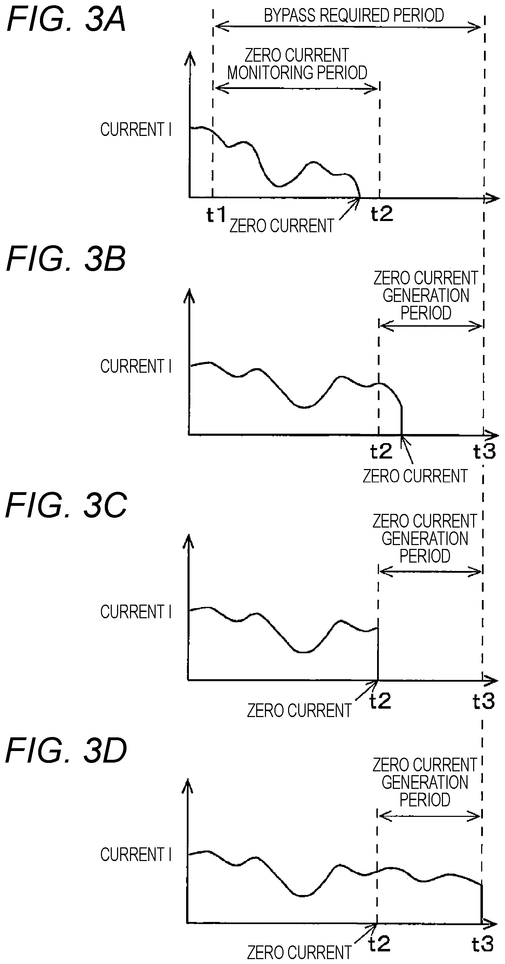

Figs. 3A to 3D are timing charts illustrating the bypass control of the bypass control unit 101 shown in Fig. 2. In Figs. 3A to 3D, a horizontal axis represents time, and a current I on a vertical axis represents a current value measured by the current sensor 13. First, the bypass control during discharge of the power storage system 10 will be described.

Time t1 in Fig. 3A is start time of the bypass required period. The bypass required period is a period during which bypass switching (switching from the connection state to the bypass state) by the bypass circuits B1 to Bn of the storage batteries C1 to Cn is required. During discharge, a voltage value of a storage battery Cx that is required to be bypassed at the time t1 is a predetermined threshold value V1 (for example, 3.0 V) obtained by adding a margin (for example, 0.2 V) to a discharge end voltage V2 (for example, 2.8 V), in which x is any of 1 to n.

The time t1 is also start time of a zero current monitoring period. The zero current monitoring period is a period during which the zero current detection unit 102 monitors whether the zero current state of the external system 16 is detected. End time of the zero current monitoring period is time t2. During discharge, the voltage value of the storage batteries Cx that is required to be bypassed at the time t2 is the discharge end voltage V2.

The time t2 in Figs. 3B to 3D is also start time of a zero current generation period. The zero current generation period is a period during which a forced zero current state in which the charge and discharge current between the power storage system 10 and the external system 16 is forcibly set to zero is generated. End time of the zero current generation period is time t3. During discharge, a voltage value of the storage battery Cx that is required to be bypassed at the time t3 is an over-discharge threshold value V3. For example, when the discharge end voltage V2 is 2.8 V, the over-discharge threshold value V3 is set to 2.5 V, which is set to be slightly lower than the discharge end voltage V2.

When the voltage value of each of the storage batteries C1 to Cn during discharge decreases to the predetermined threshold value V1 and the bypass required period and the zero current monitoring period are started, the bypass control unit 101 monitors whether the zero current state is detected by the zero current detection unit 102. When the zero current state is detected by the zero current detection unit 102 during the bypass required period and the zero current monitoring period, the bypass control unit 101 switches the storage battery Cx that is required to be bypassed from the connection state to the bypass state. At this time, as described above, the bypass control unit 101 control the ON/OFF switching from the connection state in which the bypass switch S_Ax is turned off and the cut-off switch S_Bx is turned on to the bypass state in which the bypass switch S_Ax is turned on and the cut-off switch S_Bx is turned off, via a state in which both the switches are turned off.

When the zero current generation period is started without the zero current state being detected by the zero current detection unit 102 during the period from the start time t1 to the end time t2 of the zero current monitoring period, the bypass control unit 101 monitors the determination result of the operating state of the external system 16 by the external system state determination unit 103. The bypass control unit 101 does not generate the zero current state while the external system state determination unit 103 determines that the operating state of the external system 16 is the predetermined operating state (a state in which there is a high torque request for the driving motor, a state in which there is an output request for the electric pump for a brake, or the like) during the zero current generation period. On the other hand, the bypass control unit 101 generates the zero current state when the external system state determination unit 103 determines that the operating state of the external system 16 is other than the predetermined operating state during the zero current generation period.

As shown in Fig. 3B, when the operating state of the external system 16 is the predetermined operating state at the start time t2 of the zero current generation period, the generation of the zero current state is prohibited from the start time t2 until the operating state of the external system 16 becomes not the predetermined operating state. Then, when the operating state of the external system 16 is no longer the predetermined operating state, the zero current state is generated by the bypass control unit 101. Here, the bypass control unit 101 turns off the bypass switch S_Ax and the cut-off switch S_Bx of any one bypass circuit Bx, to generate the zero current state. For example, the bypass control unit 101 turns off the bypass switch S_Ax and the cutoff switch S_Bx of the bypass circuit Bx corresponding to the storage battery Cx that is required to be bypassed, to generate the zero current state.

As shown in Fig. 3C, when the operating state of the external system 16 is not the predetermined operating state at the start time t2 of the zero current generation period, at the start time t2, the generation of the zero current state is permitted, and the zero current state is generated by the bypass control unit 101. On the other hand, as shown in Fig. 3D, when the operating state of the external system 16 is maintained in the predetermined operating state during the period from the start time t2 to the end time t3 of the zero current generation period, the state in which the generation of the zero current state is prohibited is continued during a period from the start time t2 to the end time t3. Then, regardless of the operating state of the external system 16, the zero current state is generated by the bypass control unit 101 at the end time t3.

The bypass control unit 101 switches the storage battery Cx during discharge, which is required to be bypassed but is not switched to the bypass state during the zero current monitoring period, from the connection state to the bypass state during the zero current generation period. Here, when the bypass switch S_Ax and the cut-off switch S_Bx of the bypass circuit Bx corresponding to the storage battery Cx that is required to be bypassed are turned off to generate the zero current state, the switching of the storage battery Cx that is required to be bypassed to the bypass state is completed only by turning on the bypass switch S_Ax of the bypass circuit Bx.

Instead of setting the start time and the end time of the bypass required period, the zero current monitoring period, and the zero current generation period according to the voltage value of each of the storage batteries C1 to Cn, the start time and the end time of the bypass required period, the zero current monitoring period, and the zero current generation period may be set according to a state of charge (SOC) of each of the storage batteries C1 to Cn. That is, a state of charge SOC1 corresponding to the predetermined threshold value V1 may be set to a state of charge at the start time t1 of the bypass required period and the zero current monitoring period, a state of charge SOC2 corresponding to the discharge end voltage V2 may be set to a state of charge at the end time t2 of the zero current monitoring period and the start time t2 of the zero current generation period, and a state of charge SOC3 corresponding to the over-discharge threshold value V3 may be set to a state of charge at the end time t3 of the zero current generation period and the bypass required period. Further, the start time and the end time of the bypass required period, the zero current monitoring period, and the zero current generation period may be set according to an open circuit voltage (OCV) of each of the storage batteries C1 to Cn.

Next, the bypass control during charge of the power storage system 10 will be described. The voltage value of each of the storage batteries C1 to Cn at the start time t1 of the bypass required period during charge is a predetermined threshold value V1' (for example, 3.8 V) obtained by subtracting a margin (for example, 0.2 V) from a charge end voltage V2' (for example, 4.0 V). In addition, the voltage value of the storage battery Cx that is required to be bypassed at the end time t2 of the zero current monitoring period is a charge end voltage V2'. Further, the voltage value of the storage battery Cx that is required to be bypassed at the end time t3 of the zero current monitoring period is an over-charge threshold value V3'. For example, when the charge end voltage V2' is 4.0 V, the over-charge threshold value V3' is 4.2 V, which is set to be slightly greater than the charge end voltage V2'.

When the voltage value of each of the storage batteries C1 to Cn during charge increases to the predetermined threshold value V1' and the bypass required period and the zero current monitoring period are started, the bypass control unit 101 monitors whether the zero current state is detected by the zero current detection unit 102. When the zero current state is detected by the zero current detection unit 102 during the bypass required period and the zero current monitoring period, the bypass control unit 101 switches the storage battery Cx that is required to be bypassed from the connection state to the bypass state. At this time, as described above, the bypass control unit 101 control the ON/OFF switching from the connection state in which the bypass switch S_Ax is turned off and the cut-off switch S_Bx is turned on to the bypass state in which the bypass switch S_Ax is turned on and the cut-off switch S_Bx is turned off, via a state in which both the switches are turned off.

When the zero current generation period is started without the zero current state being detected by the zero current detection unit 102 during the period from the start time t1 to the end time t2 of the zero current monitoring period, the bypass control unit 101 monitors the determination result of the operating state of the external system 16 by the external system state determination unit 103. The bypass control unit 101 does not generate the zero current state while the external system state determination unit 103 determines that the operating state of the external system 16 is the predetermined operating state (the driving motor is in a regeneration state or the like) during the zero current generation period. On the other hand, the bypass control unit 101 generates the zero current state when the external system state determination unit 103 determines that the operating state of the external system 16 is other than the predetermined operating state during the zero current generation period.

As shown in Fig. 3B, when the operating state of the external system 16 is the predetermined operating state at the start time t2 of the zero current generation period, the generation of the zero current state is prohibited from the start time t2 until the operating state of the external system 16 becomes not the predetermined operating state. Then, when the operating state of the external system 16 is no longer the predetermined operating state, the zero current state is generated by the bypass control unit 101.

As shown in Fig. 3C, when the operating state of the external system 16 is not the predetermined operating state at the start time t2 of the zero current generation period, at the start time t2, the generation of the zero current state is permitted, and the zero current state is generated by the bypass control unit 101. On the other hand, as shown in Fig. 3D, when the operating state of the external system 16 is maintained in the predetermined operating state during the period from the start time t2 to the end time t3 of the zero current generation period, the state in which the generation of the zero current state is prohibited is continued during a period from the start time t2 to the end time t3. Then, regardless of the operating state of the external system 16, the zero current state is generated by the bypass control unit 101 at the end time t3.

The bypass control unit 101 switches the storage battery Cx during charge, which is required to be bypassed but is not switched to the bypass state during the zero current monitoring period, from the connection state to the bypass state during the zero current generation period.

Instead of setting the start time and the end time of the bypass required period, the zero current monitoring period, and the zero current generation period according to the voltage value of each of the storage batteries C1 to Cn, the start time and the end time of the bypass required period, the zero current monitoring period, and the zero current generation period may be set according to the SOC of each of the storage batteries C1 to Cn. That is, a state of charge SOC1' corresponding to the predetermined threshold value V1' may be set to a state of charge at the start time t1 of the bypass required period and the zero current monitoring period, a state of charge SOC2' corresponding to the charge end voltage V2' may be set to a state of charge at the end time t2 of the zero current monitoring period and the start time t2 of the zero current generation period, and a state of charge SOC3' corresponding to the over-charge threshold value V3' may be set to a state of charge at the end time t3 of the zero current generation period and the bypass required period. Further, the start time and the end time of the bypass required period, the zero current monitoring period, and the zero current generation period may be set according to the open circuit voltage of each of the storage batteries C1 to Cn.

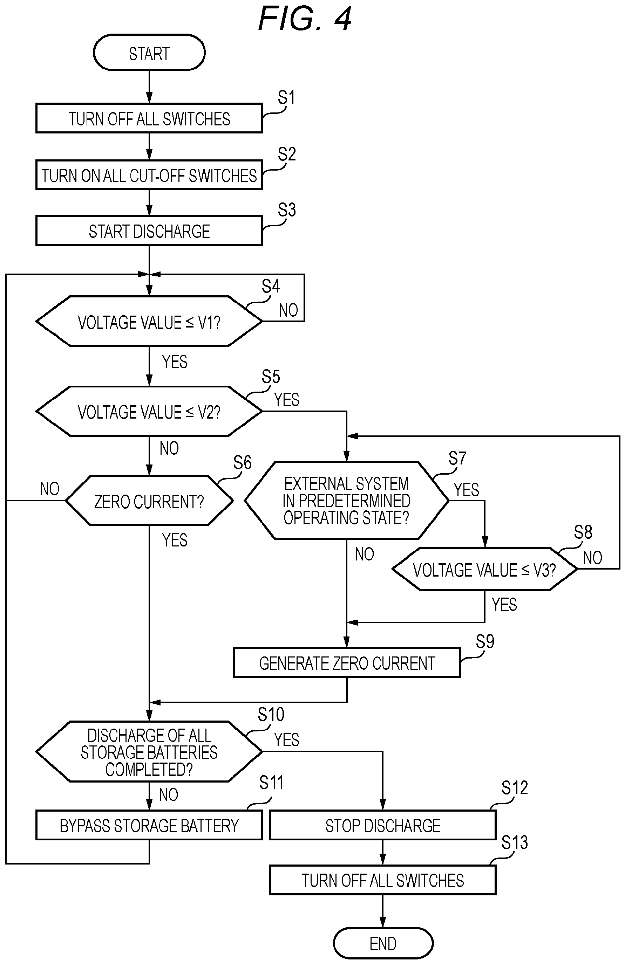

Fig. 4 is a flowchart illustrating the discharge control by the control device 100 shown in Fig. 2. The process shown in this flowchart is started when the power storage system 1 is set to a discharge mode, and the process proceeds to step S1.

In step S1, the bypass control unit 101 turns off all the bypass switches S_A1 to S_An and all the cut-off switches S_B1 to S_Bn. Next, in step S2, the bypass control unit 101 turns on all the cut-off switches S_B1 to S_Bn. Next, in step S3, the discharge of the power storage system 10 starts. At this time, all the storage batteries C1 to Cn of the power storage system 10 are connected in series.

Next, in step S4, the bypass control unit 101 determines whether the voltage value of each of the storage batteries C1 to Cn measured by the voltage sensor 12 is equal to or less than the predetermined threshold value V1. When a negative determination is made in step S4, step S4 is repeated, and when an affirmative determination is made in step S4, the process proceeds to step S5.

In step S5, the bypass control unit 101 determines whether the voltage value of the storage battery Cx, which is required to be bypassed, measured by the voltage sensor 12 is equal to or less than the discharge end voltage V2. When a negative determination is made in step S5, the process proceeds to step S6, and when an affirmative determination is made in step S5, the process proceeds to step S7.

In step S6, the bypass control unit 101 determines whether the zero current state is detected by the zero current detection unit 102. When a negative determination is made in step S6, the process proceeds to step S4, and when an affirmative determination is made in step S6, the process proceeds to step S10.

In step S7, the bypass control unit 101 determines whether the operating state of the external system 16 is determined to be the predetermined operating state by the external system state determination unit 103. When an affirmative determination is made in step S7, the process proceeds to step S8, and when a negative determination is made in step S7, the process proceeds to step S9.

In step S8, the bypass control unit 101 determines whether the voltage value of the storage battery Cx that is required to be bypassed is equal to or less than the over-discharge threshold value V3. When an affirmative determination is made in step S8, the process proceeds to step S9, and when a negative determination is made in step S8, the process proceeds to step S7.

In step S9, the bypass control unit 101 generates the zero current state. Specifically, the bypass control unit 101 turns off the corresponding bypass switch S_Ax and the corresponding cut-off switch S_Bx of any one bypass circuit Bx, to generate the zero current state. Then, the process proceeds from step S9 to step S10.

In step S10, the bypass control unit 101 determines whether the discharge of all the storage batteries C1 to Cn is completed. That is, in step S10, the bypass control unit 101 determines whether all the storage batteries C1 to Cn are bypassed by the bypass circuits B1 to Bn. When a negative determination is made in step S10, the process proceeds to step S11, and when an affirmative determination is made in step S10, the process proceeds to step S12.

In step S11, the bypass control unit 101 switches the storage battery Cx that is required to be bypassed from the connection state to the bypass state. Then, the process proceeds from step S11 to step S4.

On the other hand, in step S12, the discharge of the power storage system 10 stops. Next, in step S13, the bypass control unit 101 turns off the bypass switches S_A1 to S_An of the bypass circuits B1 to Bn corresponding to all the storage batteries C1 to Cn of the power storage system 10. At this time, all the cut-off switches S_B1 to S_Bn have already been turned off. This is the end of the discharge control.

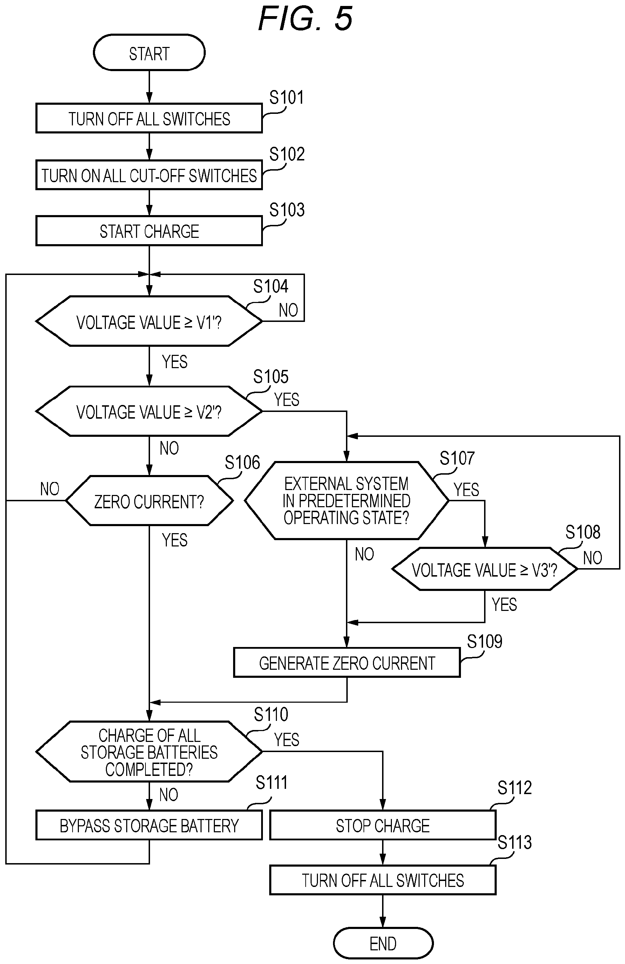

Fig. 5 is a flowchart illustrating the charge control by the control device 100 shown in Fig. 2. The process shown in this flowchart is started when the power storage system 1 is set to a charge mode, and the process proceeds to step S101.

In step S101, the bypass control unit 101 turns off all the bypass switches S_A1 to S_An and all the cut-off switches S_B1 to S_Bn. Next, in step S102, the bypass control unit 101 turns on all the cut-off switches S_B1 to S_Bn. Next, in step S103, the charge of the power storage system 10 starts. At this time, all the storage batteries C1 to Cn of the power storage system 10 are connected in series.

Next, in step S104, the bypass control unit 101 determines whether the voltage value of each of the storage batteries C1 to Cn measured by the voltage sensor 12 is equal to or greater than the predetermined threshold value V1'. When a negative determination is made in step S104, step S104 is repeated, and when an affirmative determination is made in step S104, the process proceeds to step S105.

In step S105, the bypass control unit 101 determines whether the voltage value of the storage battery Cx, which is required to be bypassed, measured by the voltage sensor 12 is equal to or greater than the charge end voltage V2'. When a negative determination is made in step S105, the process proceeds to step S106, and when an affirmative determination is made in step S105, the process proceeds to step S107.

In step S106, the bypass control unit 101 determines whether the zero current state is detected by the zero current detection unit 102. When a negative determination is made in step S106, the process proceeds to step S104, and when an affirmative determination is made in step S106, the process proceeds to step S110.

In step S107, the bypass control unit 101 determines whether the operating state of the external system 16 is determined to be the predetermined operating state by the external system state determination unit 103. When an affirmative determination is made in step S107, the process proceeds to step S108, and when a negative determination is made in step S107, the process proceeds to step S109.

In step S108, the bypass control unit 101 determines whether the voltage value of the storage batteries Cx that is required to be bypassed is equal to or greater than the over-charge threshold value V3'. When an affirmative determination is made in step S108, the process proceeds to step S109, and when a negative determination is made in step S108, the process proceeds to step S107.

In step S109, the bypass control unit 101 generates the zero current state. Specifically, the bypass control unit 101 turns off the corresponding bypass switch S_Ax and the corresponding cut-off switch S_Bx of any one bypass circuit Bx, to generate the zero current state. Then, the process proceeds from step S109 to step S110.

In step S110, the bypass control unit 101 determines whether the charge of all the storage batteries C1 to Cn is completed. That is, in step S110, the bypass control unit 101 determines whether all the storage batteries C1 to Cn are bypassed by the bypass circuits B1 to Bn. When a negative determination is made in step S110, the process proceeds to step S111, and when an affirmative determination is made in step S110, the process proceeds to step S112.

In step S111, the bypass control unit 101 switches the storage battery C1 to Cn that is required to be bypassed from the connection state to the bypass state. Then, the process proceeds from step S111 to step S104.

On the other hand, in step S112, the charge of the power storage system 10 stops. Next, in step S113, the bypass control unit 101 turns off the bypass switches S_A1 to S_An of the bypass circuits B1 to Bn corresponding to all the storage batteries C1 to Cn of the power storage system 10. At this time, all the cut-off switches S_B1 to S_Bn have already been turned off. This is the end of the charge control.

As described above, the control device 100 according to the present embodiment executes a detection process and a first bypass process when the power storage system 1 is discharged. In the detection process, the control device 100 detects the zero current state in which the current value detected by the current sensor 13 becomes zero in the bypass required period and the zero current monitoring period during which the voltage value of each of the storage batteries C1 to Cn during discharge is equal to or less than the predetermined threshold value V1. Further, when the zero current state is detected in the detection process, the control device 100 bypasses the storage battery Cx, which is required to be bypassed, whose voltage value is equal to or less than the predetermined threshold value V1, by the bypass circuit Bx.

Here, when the storage battery Cx that is required to be bypassed is switched from the connection state to the bypass state, from the viewpoint of preventing a short circuit, the ON/OFF switching is performed from the connection state in which the bypass switch S_Ax is turned off and the cut-off switch S_Bx is turned on to the bypass state in which the bypass switch S_Ax is turned on and the cut-off switch S_Bx is turned off, via the state in which both the switches are turned off. Therefore, when the storage battery Cx that is required to be bypassed is switched from the connection state to the bypass state when the power storage system 1 is discharged, the discharge from the power storage system 1 to the external system 16 instantaneously stops. At this time, if the load of the external system 16 is in operation, the load instantaneously stops.

Therefore, the control device 100 according to the present embodiment switches the storage battery Cx that is required to be bypassed from the connection state to the bypass state when the discharge current from the power storage system 1 to the external system 16 becomes zero according to the operating state of the external system 16, such as when the external system 16 switches from power running to regeneration. Accordingly, when the storage battery Cx that is required to be bypassed is switched from the connection state to the bypass state when the power storage system 1 is discharged, it is possible to prevent unintended instantaneous power failure from occurring in the load of the external system 16.

In addition, the control device 100 according to the present embodiment executes the detection process and the first bypass process when the power storage system 1 is charged. In the detection process, the control device 100 detects the zero current state in which the current value detected by the current sensor 13 becomes zero in the bypass required period and the zero current monitoring period during which the voltage value of each of the storage batteries C1 to Cn during charge is equal to or greater than the predetermined threshold value V1'. Further, when the zero current state is detected in the detection process, the control device 100 bypasses the storage battery Cx, which is required to be bypassed, whose voltage value is equal to or greater than the predetermined threshold value V1', by the bypass circuit Bx.

Here, when the storage battery Cx that is required to be bypassed is switched from the connection state to the bypass state when the power storage system 1 is charged, the charge from a power generation system of the external system 16 to the power storage system 1 instantaneously stops. At this time, if the power generation system of the external system 16 that performs a regenerative output of the driving motor of the electric vehicle, is in a regenerative operation, regeneration invalidation occurs instantaneously in the power generation system of the external system 16.

Therefore, the control device 100 according to the present embodiment switches the storage battery Cx that is required to be bypassed from the connection state to the bypass state when the charge current from the power generation system of the external system 16 to the power storage system 1 becomes zero according to the operating state of the external system 16, such as when the external system 16 switches from the regeneration to the power running. Accordingly, when the storage battery Cx that is required to be bypassed is switched from the connection state to the bypass state when the power storage system 1 is charged, it is possible to prevent regeneration invalidation from occurring in the power generation system of the external system 16.

The control device 100 according to the present embodiment executes a zero current process and a second bypass process when the power storage system 1 is discharged. In the zero current process, the control device 100 sets the discharge current from the power storage system 1 to the external system 16 to zero in the zero current generation period during which the voltage value of each of the storage batteries C1 to Cn during discharge is equal to or less than the discharge end voltage V2 which is lower than the predetermined threshold value V1 and equal to or greater than the over-discharge threshold value V3 which is lower than the discharge end voltage V2. Further, when executing the zero current process, the control device 100 bypasses the storage battery Cx, which is required to be bypassed, whose voltage value is equal to or less than the discharge end voltage V2 and equal to or greater than the over-discharge threshold value V3, by the bypass circuit Bx. That is, when the zero current state is not detected during the zero current monitoring period during discharge, before the storage battery Cx is over-discharged, the control device 100 forcibly generates the zero current state, and switches the storage battery Cx that is required to be bypassed from the connection state to the bypass state. As a result, it is possible to prevent over-discharge of the storage batteries C1 to Cn while suppressing the occurrence of unintended instantaneous power failure of the load of the external system 16.

The control device 100 according to the present embodiment executes the zero current process and the second bypass process when the power storage system 1 is charged. In the zero current process, the control device 100 sets the charge current from the external system 16 to the power storage system 1 to zero in the zero current generation period during which the voltage value of each of the storage batteries C1 to Cn during charge is equal to or greater than the charge end voltage V2' which is greater than the predetermined threshold value V1' and equal to or less than the over-charge threshold value V3' which is greater than the charge end voltage V2'. Further, when executing the zero current process, the control device 100 bypasses the storage battery Cx, which is required to be bypassed, whose voltage value is equal to or greater than the charge end voltage V2' and equal to or less than the over-charge threshold value V3', by the bypass circuit Bx. That is, when the zero current state is not detected during the zero current monitoring period during charge, before the storage battery Cx is over-charged, the control device 100 forcibly generates the zero current state, and switches the storage battery Cx that is required to be bypassed from the connection state to the bypass state. As a result, it is possible to prevent over-charge of the storage batteries C1 to Cn while suppressing the occurrence of regeneration invalidation of the power generation system of the external system 16.

The control device 100 according to the present embodiment does not generate the zero current state while the external system 16 is in the predetermined operating state (a high torque request, a torque output continuation request, or the like) from the start time t2 of the zero current generation period when the power storage system 1 is discharged. Then, the control device 100 generates the zero current state after the external system 16 is no longer in the predetermined operating state or at the end time t3 of the zero current generation period. That is, when the load of the external system 16 is in an operating state in which instantaneous power failure should be avoided, such as when the vehicle is climbing a slope or when the vehicle operates in a hill assist mode, the control device 100 generates the zero current state after the end of the operating state, or generates the zero current state at a time point when the voltage value of the storage battery Cx that is required to be bypassed decreases to the over-discharge threshold value V3. As a result, it is possible to avoid the bypass switching of the storage battery Cx that is required to be bypassed as much as possible while the load of the external system 16 is in the operating state in which the instantaneous power failure should be avoided, and it is possible to prevent the over-discharge of the storage batteries C1 to Cn.

The control device 100 according to the present embodiment does not generate the zero current state while the external system 16 is in the predetermined operating state (for example, execution of a regenerative control) from the start time t2 of the zero current generation period when the power storage system 1 is charged. Then, the control device 100 generates the zero current state after the external system 16 is no longer in the predetermined operating state or at the end time t3 of the zero current generation period. That is, when the power generation system of the external system 16 is in an operating state in which the regeneration invalidation should be avoided, such as when the regenerative control of the external system 16 is executed, the control device 100 generates the zero current state after the end of the operating state, or generates the zero current state at a time point when the voltage value of the storage battery Cx that is required to be bypassed increases to the over-charge threshold value V3'. As a result, it is possible to avoid the bypass switching of the storage battery Cx that is required to be bypassed as much as possible while the power generation system of the external system 16 is in the operating state in which the regeneration invalidation should be avoided, and it is possible to prevent the over-charge of the storage batteries C1 to Cn.

Although the present disclosure has been described above based on the embodiment, the present disclosure is not limited to the above embodiment, and modifications may be made within the limit of the appended claims.

For example, in the above embodiment, the power storage system 1 including one power storage system 10 has been described as an example, but the present disclosure can also be applied to a power storage system including two or more power storage systems 10. Although the voltage values of the storage batteries C1 to Cn at the end time t2 of the zero current monitoring period (the start time t2 of the zero current generation period) are set to the discharge end voltage V2 or the charge end voltage V2', the voltage values of the storage batteries C1 to Cn at the end time t3 of the zero current generation period may be set to the discharge end voltage or the charge end voltage. In this case, the voltage values of the storage batteries C1 to Cn at the end time t2 of the zero current monitoring period (the start time t2 of the zero current generation period) may be set to a discharge threshold value obtained by adding a margin to the discharge end voltage or a charge threshold value obtained by subtracting the margin from the charge end voltage. Further, the voltage values of the storage batteries C1 to Cn at the start time t1 of the bypass required period and the zero current monitoring period may be set to a discharge threshold value obtained by adding a margin to the discharge threshold value at the end time t2 of the zero current monitoring period or a charge threshold value obtained by subtracting the margin from the charge threshold value at the end time t2 of the zero current monitoring period.

In the above embodiment, the discharge threshold value and the charge threshold value at the start time t1 of the bypass required period and the zero current monitoring period, the discharge threshold value and the charge threshold value at the end time t2 of the zero current monitoring period (the start time t2 of the zero current generation period), and the discharge threshold value and the charge threshold value at the end time t3 of the zero current generation period and the bypass required period are set according to the voltage values of the storage batteries C1 to Cn. However, the discharge threshold value and the charge threshold value may be set according to the state of charge (SOC) of each of the storage batteries C1 to Cn. Further, the discharge threshold value and the charge threshold value may be set according to the open circuit voltage of each of the storage batteries C1 to Cn.

In the above embodiment, the power storage system 1 using a used storage battery has been described as an example, but the present disclosure can also be applied to a power storage system using a new storage battery. Even if the storage battery to be used is new, the capacity of the storage battery is different due to manufacturing variations and variations in deterioration caused by use, and thus the same effects as those of the above-described embodiment are achieved by applying the present disclosure.

In the above embodiment, a process of forcibly generating the zero current state is executed, but the execution of the process is not essential. For example, if the frequency of occurrence of the zero current state during the zero current monitoring period is sufficiently high, the execution of the process is unnecessary.

According to a first aspect of the present disclosure, a storage battery control device controls a power storage system (10) including a plurality of storage batteries (C1 to Cn) connected in series with a load or a power generation unit (16), a bypass unit (B1 to Bn) configured to bypass the storage battery (C1 to Cn), a current sensor (13) configured to detect a current value of the load or the power generation unit (16), and a control device (100). The control device (100) is configured to execute: a first detection process of, during a first discharge period in which a voltage value or a state of charge of the storage battery (C1 to Cn) at discharge is equal to or less than a first discharge threshold value (V1), detecting a zero current state in which the current value detected by the current sensor (13) becomes zero; and a first bypass process of, in response to detecting the zero current state in the detection process, bypassing a storage battery (C1 to Cn) having a voltage value or a state of charge equal to or less than the first discharge threshold value (V1) by the bypass unit (B1 to Bn). Further, the control device (100) is configured to executes: a second detection process of, during a first charge period in which a voltage value or a state of charge of the storage battery (C1 to Cn) at charge is equal to or greater than a first charge threshold value (V1'), detecting the zero current state; and a second bypass process of, in response to detecting the zero current state in the detection process, bypassing a storage battery (C1 to Cn) having a voltage value or a state of charge equal to or greater than the first charge threshold value (V1') by the bypass unit (B1 to Bn).

According to a second aspect of the present disclosure, the control device (100) is configured to execute: a zero current process of, during a second discharge period during which the voltage value or the state of charge of the storage battery (C1 to Cn) during discharge is equal to or less than a second discharge threshold value (V2) lower than the first discharge threshold value (V1) and equal to or greater than a third discharge threshold value (V3) lower than the second discharge threshold value (V2), setting a discharge current from the storage battery (C1 to Cn) to the load (16) to zero; and a third bypass process of, in response to executing the zero current process, bypassing a storage battery (C1 to Cn) having a voltage value or a state of charge equal to or less than the second discharge threshold value (V2) and equal to or greater than the third discharge threshold value (V3) by the bypass unit (B1 to Bn).

According to a third aspect of the present disclosure, the execution of the zero current process is prohibited from start time of the second discharge period while the load (16) is in a predetermined operating state, and is permitted after the load (16) is no longer in the predetermined operating state or at end time of the second discharge period.

According to a fourth aspect of the present disclosure, the control device (100) is configured to execute: a zero current process of, during a second charge period in which the voltage value or the state of charge of the storage battery (C1 to Cn) at charge is equal to or greater than a second charge threshold value (V2') greater than the first charge threshold value (V1') and equal to or less than a third charge threshold value (V3') greater than the second charge threshold value (V2'), setting a charge current from the power generation unit (16) to the storage battery (C1 to Cn) to zero; and a fourth bypass process of, in response to executing the zero current process, bypassing a storage battery (C1 to Cn) having a voltage value or a state of charge equal to or greater than the second charge threshold value (V2') and equal to or less than the third charge threshold value (V3') by the bypass unit (B1 to Bn).

According to a fifth aspect of the present disclosure, the execution of the zero current process is prohibited from start time of the second charge period while the power generation unit (16) is in a predetermined operating state, and is permitted after the power generation unit (16) is no longer in the predetermined operating state or at end time of the second charge period.

According to a sixth aspect of the present disclosure, a power storage system includes: a plurality of storage batteries (C1 to Cn) connected in series with a load (16) and a power generation unit (16); a bypass unit (B1 to Bn) configured to bypasses the storage battery (C1 to Cn); a current sensor (13) configured to detect a current value of the load (16) and the power generation unit (16); and the storage battery control device having the configuration of the first aspect.

According to a seventh aspect of the present disclosure, a storage battery control method controls, using a computer, a power storage system (10) including a plurality of storage batteries (C1 to Cn) connected in series with a load (16) or a power generation unit (16), a bypass unit (B1 to Bn) configured to bypass the storage battery (C1 to Cn), a current sensor (13) configured to detect a current value of the load or the power generation unit (16), and a control device (100). The storage battery control method includes: during a period in which a voltage value or a state of charge of the storage battery (C1 to Cn) at discharge is equal to or less than a predetermined threshold value, a first detection process of detecting a zero current state in which the current value detected by the current sensor (13) becomes zero, and a first bypass process of, in response to detecting the zero current state in the first detection process, bypassing a storage battery (C1 to Cn) having a voltage value or a state of charge equal to or less than the predetermined threshold value by the bypass unit (B 1 to Bn). Further, the storage battery control method includes, during a period in which a voltage value or a state of charge of the storage battery (C1 to Cn) at charge is equal to or greater than a predetermined threshold value, a second detection process of detecting the zero current state, and a second bypass process of, in response to detecting the zero current state in the second detection process, bypassing a storage battery (C1 to Cn) having a voltage value or a state of charge equal to or greater than the predetermined threshold value by the bypass unit (B 1 to Bn).

According to the present disclosure, it is possible to prevent unintended instantaneous power failure of the load (16) or regeneration invalidation at the timing of the bypass switching of the storage battery (C1 to Cn).

## Claims

1. A storage battery control device that controls a power storage system (10) including a plurality of storage batteries (C1 to Cn) connected in series with a load or a power generation unit (16), a bypass unit (B1 to Bn) configured to bypass the storage battery (C1 to Cn), a current sensor (13) configured to detect a current value of the load or the power generation unit (16), and a control device (100), wherein
the control device (100) is configured to execute: a first detection process of, during a first discharge period in which a voltage value or a state of charge of the storage battery (C1 to Cn) at discharge is equal to or less than a first discharge threshold value (V1), detecting a zero current state in which the current value detected by the current sensor (13) becomes zero, and a first bypass process of, in response to detecting the zero current state in the first detection process, bypassing a storage battery (C1 to Cn) having a voltage value or a state of charge equal to or less than the first discharge threshold value (V1) by the bypass unit (B1 to Bn); or
a second detection process of, during a first charge period in which a voltage value or a state of charge of the storage battery (C1 to Cn) at charge is equal to or greater than a first charge threshold value (V1'), detecting the zero current state, and a second bypass process of, in response to detecting the zero current state in the second detection process, bypassing a storage battery (C1 to Cn) having a voltage value or a state of charge equal to or greater than the first charge threshold value (V1') by the bypass unit (B1 to Bn).

2. The storage battery control device according to claim 1, wherein the control device (100) is configured to execute:
a zero current process of, during a second discharge period in which the voltage value or the state of charge of the storage battery (C1 to Cn) at discharge is equal to or less than a second discharge threshold value (V2) lower than the first discharge threshold value (V1) and equal to or greater than a third discharge threshold value (V3) lower than the second discharge threshold value (V2), setting a discharge current from the storage battery (C1 to Cn) to the load (16) to zero; and
a third bypass process of, in response to executing the zero current process, bypassing a storage battery (C1 to Cn) having a voltage value or a state of charge equal to or less than the second discharge threshold value (V2) and equal to or greater than the third discharge threshold value (V3) by the bypass unit (B1 to Bn).

3. The storage battery control device according to claim 2,
wherein the execution of the zero current process is prohibited from start time of the second discharge period while the load (16) is in a predetermined operating state, and is permitted after the load (16) is no longer in the predetermined operating state or at end time of the second discharge period.

4. The storage battery control device according to claim 1, wherein the control device (100) is configured to execute:
a zero current process of, during a second charge period in which the voltage value or the state of charge of the storage battery (C1 to Cn) at charge is equal to or greater than a second charge threshold value (V2') greater than the first charge threshold value (V1') and equal to or less than a third charge threshold value (V3') greater than the second charge threshold value (V2'), setting a charge current from the power generation unit (16) to the storage battery (C1 to Cn) to zero; and
a fourth bypass process of, in response to executing the zero current process, bypassing a storage battery (C1 to Cn) having a voltage value or a state of charge equal to or greater than the second charge threshold value (V2') and equal to or less than the third charge threshold value (V3') by the bypass unit (B1 to Bn).

5. The storage battery control device according to claim 4,
wherein the execution of the zero current process is prohibited from start time of the second charge period while the power generation unit (16) is in a predetermined operating state, and is permitted after the power generation unit (16) is no longer in the predetermined operating state or at end time of the second charge period.

6. A power storage system comprising:
a plurality of storage batteries (C1 to Cn) connected in series with a load (16) and a power generation unit (16);
a bypass unit (B1 to Bn) configured to bypasses the storage battery (C1 to Cn);
a current sensor (13) configured to detect a current value of the load (16) and the power generation unit (16); and
the storage battery control device according to claim 1.

7. A storage battery control method for controlling, using a computer, a power storage system (10) including a plurality of storage batteries (C1 to Cn) connected in series with a load or a power generation unit (16), a bypass unit (B1 to Bn) configured to bypass the storage battery (C1 to Cn), a current sensor (13) configured to detect a current value of the load or the power generation unit (16), and a control device (100), the storage battery control method comprising:
during a period in which a voltage value or a state of charge of the storage battery (C1 to Cn) at discharge is equal to or less than a predetermined discharge threshold value (V1), a first detection process of detecting a zero current state in which the current value detected by the current sensor (13) becomes zero, and a first bypass process of, in response to detecting the zero current state in the first detection process, bypassing a storage battery (C1 to Cn) having a voltage value or a state of charge equal to or less than the predetermined discharge threshold value (V1) by the bypass unit (B1 to Bn); or
during a period in which a voltage value or a state of charge of the storage battery (C1 to Cn) at charge is equal to or greater than a predetermined charge threshold value (V1'), a second detection process of detecting the zero current state, and a second bypass process of, in response to detecting the zero current state in the second detection process, bypassing a storage battery (C1 to Cn) having a voltage value or a state of charge equal to or greater than the predetermined charge threshold value (V1') by the bypass unit (B1 to Bn).

## Patentansprüche

1. Speicherbatteriesteuerungsvorrichtung, die ein Energiespeichersystem (10) steuert, das eine Vielzahl von Speicherbatterien (C1 bis Cn) enthält, die mit einer Last oder einer Energieerzeugungseinheit (16) in Reihe geschaltet sind, eine Umgehungseinheit (B1 bis Bn), die dazu konfiguriert ist, die Speicherbatterie (C1 bis Cn) zu umgehen, einen Stromsensor (13), der dazu konfiguriert ist, einen Stromwert der Last oder der Energieerzeugungseinheit (16) zu erfassen, und eine Steuerungsvorrichtung (100), wobei
die Steuerungsvorrichtung (100) dazu konfiguriert ist, Folgendes auszuführen: einen ersten Erfassungsprozess, um während einer ersten Entladungsperiode, in der ein Spannungswert oder ein Ladezustand der Speicherbatterie (C1 bis Cn) bei der Entladung gleich oder kleiner als ein erster Entladungsschwellenwert (V1) ist, einen Nullstromzustand zu erfassen, in dem der durch den Stromsensor (13) erfasste Stromwert null wird und einen ersten Umgehungsprozess, bei dem als Reaktion auf das Erfassen des Nullstromzustands in dem ersten Erfassungsprozess eine Speicherbatterie (C1 bis Cn) mit einem Spannungswert oder einem Ladezustand, der gleich oder kleiner als der erste Entladungsschwellenwert (V1) ist, durch die Umgehungseinheit (B1 bis Bn) umgangen wird; oder
einen zweiten Erfassungsprozess, um während einer ersten Ladeperiode, in der ein Spannungswert oder ein Ladezustand der Speicherbatterie (C1 bis Cn) beim Laden gleich oder größer als ein erster Ladeschwellenwert (V1') ist, den Nullstromzustand zu erfassen, und einen zweiten Umgehungsprozess, um als Reaktion auf das Erfassen des Nullstromzustands in dem zweiten Erfassungsprozess eine Speicherbatterie (C1 bis Cn) mit einem Spannungswert oder einem Ladezustand gleich oder größer als der erste Ladeschwellenwert (V1') durch die Umgehungseinheit (B1 bis Bn) zu umgehen.

2. Speicherbatteriesteuerungsvorrichtung nach Anspruch 1, wobei die Steuerungsvorrichtung (100) dazu konfiguriert ist, Folgendes auszuführen:
einen Nullstromprozess, bei dem während einer zweiten Entladungsperiode, in der der Spannungswert oder der Ladezustand der Speicherbatterie (C1 bis Cn) bei der Entladung gleich oder kleiner als ein zweiter Entladungsschwellenwert (V2) ist, der niedriger als der erste Entladungsschwellenwert (V1) ist, und gleich oder größer als ein dritter Entladungsschwellenwert (V3) ist, der niedriger als der zweite Entladungsschwellenwert (V2) ist, ein Entladungsstrom von der Speicherbatterie (C1 bis Cn) zu der Last (16) auf null gesetzt wird; und
einen dritten Umgehungsprozess, bei dem als Reaktion auf die Ausführung des Nullstromprozesses eine Speicherbatterie (C1 bis Cn) mit einem Spannungswert oder einem Ladezustand, der gleich oder kleiner als der zweite Entladungsschwellenwert (V2) und gleich oder größer als der dritte Entladungsschwellenwert (V3) ist, durch die Umgehungseinheit (B1 bis Bn) umgangen wird.

3. Speicherbatteriesteuerungsvorrichtung nach Anspruch 2,
wobei die Ausführung des Nullstromprozesses ab der Startzeit der zweiten Entladungsperiode verboten ist, während sich die Last (16) in einem vorgegebenen Betriebszustand befindet, und erlaubt ist, nachdem sich die Last (16) nicht mehr in dem vorgegebenen Betriebszustand befindet oder zur Endzeit der zweiten Entladungsperiode.

4. Speicherbatteriesteuerungsvorrichtung nach Anspruch 1, wobei die Steuerungsvorrichtung (100) dazu konfiguriert ist, Folgendes auszuführen:
einen Nullstromprozess, bei dem während einer zweiten Ladeperiode, in der der Spannungswert oder der Ladezustand der Speicherbatterie (C1 bis Cn) bei der Ladung gleich oder größer als ein zweiter Ladeschwellenwert (V2') ist, der größer als der erste Ladeschwellenwert (V1') ist, und gleich oder kleiner als ein dritter Ladeschwellenwert (V3') ist, der größer als der zweite Ladeschwellenwert (V2') ist, ein Ladestrom von der Energie Erzeugungseinheit (16) zu der Speicherbatterie (C1 bis Cn) auf null gesetzt wird; und
einen vierten Umgehungsprozess, bei dem als Reaktion auf die Ausführung des Nullstromprozesses eine Speicherbatterie (C1 bis Cn) mit einem Spannungswert oder einem Ladezustand, der gleich oder größer als der zweite Ladeschwellenwert (V2') und gleich oder kleiner als der dritte Ladeschwellenwert (V3') ist, durch die Umgehungseinheit (B1 bis Bn) umgangen wird.

5. Speicherbatteriesteuerungsvorrichtung nach Anspruch 4,
wobei die Ausführung des Nullstromprozesses ab der Startzeit der zweiten Ladeperiode verboten ist, während sich die Energieerzeugungseinheit (16) in einem vorgegebenen Betriebszustand befindet, und erlaubt ist, nachdem sich die Energieerzeugungseinheit (16) nicht mehr in dem vorgegebenen Betriebszustand befindet oder zur Endzeit der zweiten Ladeperiode.

6. Energiespeichersystem, umfassend:
eine Vielzahl von Speicherbatterien (C1 bis Cn), die in Reihe mit einer Last (16) und einer Energieerzeugungseinheit (16) geschaltet sind;
eine Umgehungseinheit (B1 bis Bn), die dazu konfiguriert ist, die Speicherbatterie (C1 bis Cn) zu umgehen;
einen Stromsensor (13), der dazu konfiguriert ist, einen Stromwert der Last (16) und der Energieerzeugungseinheit (16) zu erfassen; und
eine Speicherbatteriesteuerungsvorrichtung nach Anspruch 1.

7. Speicherbatteriesteuerungsverfahren zum Steuern, unter Verwendung eines Computers, eines Energiespeichersystems (10), das eine Vielzahl von Speicherbatterien (C1 bis Cn) enthält, die mit einer Last oder einer Energieerzeugungseinheit (16) in Reihe geschaltet sind, eine Umgehungseinheit (B1 bis Bn), die dazu konfiguriert ist, die Speicherbatterie (C1 bis Cn) zu umgehen, einen Stromsensor (13), der dazu konfiguriert ist, einen Stromwert der Last oder der Energieerzeugungseinheit (16) zu erfassen, und eine Steuerungsvorrichtung (100), wobei das Speicherbatteriesteuerungsverfahren umfasst:
während einer Periode, in der ein Spannungswert oder ein Ladezustand der Speicherbatterie (C1 bis Cn) bei der Entladung gleich oder kleiner als ein vorgegebener Entladungsschwellenwert (V1) ist, einen ersten Erfassungsprozess zum Erfassen eines Nullstromzustands, in dem der durch den Stromsensor (13) erfasste Stromwert null wird und einen ersten Umgehungsprozess, bei dem als Reaktion auf das Erfassen des Nullstromzustands in dem ersten Erfassungsprozess eine Speicherbatterie (C1 bis Cn) mit einem Spannungswert oder einem Ladezustand, der gleich oder kleiner als der vorgegebene Entladungsschwellenwert (V1) ist, durch die Umgehungseinheit (B1 bis Bn) umgangen wird; oder
während einer Periode, in der ein Spannungswert oder ein Ladezustand der Speicherbatterie (C1 bis Cn) beim Laden gleich oder größer als ein vorgegebener Ladeschwellenwert (V1') ist, einen zweiten Erfassungsprozess zum Erfassen des Nullstromzustands, und einen zweiten Umgehungsprozess, um als Reaktion auf das Erfassen des Nullstromzustands in dem zweiten Erfassungsprozess eine Speicherbatterie (C1 bis Cn) mit einem Spannungswert oder einem Ladezustand gleich oder größer als der vorgegebene Ladeschwellenwert (V1') durch die Umgehungseinheit (B1 bis Bn) zu umgehen.

## Revendications

1. Dispositif de contrôle de batterie de stockage contrôlant un système de stockage d'électricité (10) qui comprend une pluralité de batteries de stockage (C1 à Cn) connectées en série avec une charge ou une unité de génération d'électricité (16), une unité de dérivation (B1 à Bn) configurée pour contourner la batterie de stockage (C1 à Cn), un capteur de courant (13) configuré pour détecter une valeur de courant de la charge ou de l'unité de génération d'électricité (16), et un dispositif de contrôle (100), dans lequel le dispositif de contrôle (100) est configuré pour exécuter :
un premier processus de détection consistant, durant une première période de décharge au cours de laquelle une valeur de tension ou un état de charge de la batterie de stockage (C1 à Cn) en décharge est inférieur ou égal à une première valeur seuil de décharge (V1), à détecter un état de courant nul dans lequel la valeur de courant détectée par le capteur de courant (13) devient nulle, et un premier processus de dérivation consistant, en réponse à la détection de l'état de courant nul dans le premier processus de détection, à contourner, via l'unité de dérivation (B1 à Bn), une batterie de stockage (C1 à Cn) ayant une valeur de tension ou un état de charge inférieur ou égal à la première valeur seuil de décharge (V1) ; ou
un deuxième processus de détection consistant, durant une première période de charge au cours de laquelle une valeur de tension ou un état de charge de la batterie de stockage (C1 à Cn) en charge est supérieur ou égal à une première valeur seuil de charge (V1'), à détecter l'état de courant nul, et un deuxième processus de dérivation consistant, en réponse à la détection de l'état de courant nul dans le deuxième processus de détection, à contourner, via l'unité de dérivation (B1 à Bn), une batterie de stockage (C1 à Cn) ayant une valeur de tension ou un état de charge supérieur ou égal à la première valeur seuil de charge (V1').

2. Dispositif de contrôle de batterie de stockage selon la revendication 1, dans lequel le dispositif de contrôle (100) est configuré pour exécuter :
un processus à courant nul consistant, durant une deuxième période de décharge au cours de laquelle la valeur de tension ou l'état de charge de la batterie de stockage (C1 à Cn) en décharge est inférieur ou égal à une deuxième valeur seuil de décharge (V2) inférieure à la première valeur seuil de décharge (V1) et supérieure ou égale à une troisième valeur seuil de décharge (V3) inférieure à la deuxième valeur seuil de décharge (V2), à consigner à zéro un courant de décharge allant de la batterie de stockage (C1 à Cn) à la charge (16) ; et
un troisième processus de dérivation consistant, en réponse à l'exécution du processus à courant nul, à contourner, via l'unité de dérivation (B1 à Bn), une batterie de stockage (C1 à Cn) ayant une valeur de tension ou un état de charge inférieur ou égal à la deuxième valeur seuil de décharge (V2) et supérieur ou égal à la troisième valeur seuil de décharge (V3).

3. Dispositif de contrôle de batterie de stockage selon la revendication 2,
dans lequel l'exécution du processus à courant nul est interdite à partir du temps de début de la deuxième période de décharge alors que la charge (16) est dans un état de fonctionnement prédéterminé, et est autorisée après que la charge (16) n'est plus dans l'état de fonctionnement prédéterminé ou au temps de fin de la deuxième période de décharge.

4. Dispositif de contrôle de batterie de stockage selon la revendication 1, dans lequel le dispositif de contrôle (100) est configuré pour exécuter :
un processus à courant nul consistant, durant une deuxième période de charge au cours de laquelle la valeur de tension ou l'état de charge de la batterie de stockage (C1 à Cn) en charge est supérieur ou égal à une deuxième valeur seuil de charge (V2') supérieure à la première valeur seuil de charge (V1') et inférieur ou égal à une troisième valeur seuil de charge (V3') supérieure à la deuxième valeur seuil de charge (V2'), à consigner à zéro un courant de charge allant de l'unité de génération d'électricité (16) à la batterie de stockage (C1 à Cn) ; et
un quatrième processus de dérivation consistant, en réponse à l'exécution du processus à courant nul, à contourner, via l'unité de dérivation (B1 à Bn), une batterie de stockage (C1 à Cn) ayant une valeur de tension ou un état de charge supérieur ou égal à la deuxième valeur seuil de charge (V2') et inférieur ou égal à la troisième valeur seuil de charge (V3').

5. Dispositif de contrôle de batterie de stockage selon la revendication 4,
dans lequel l'exécution du processus à courant nul est interdite à partir du temps de début de la deuxième période de charge alors que l'unité de génération d'électricité (16) est dans un état de fonctionnement prédéterminé, et est autorisée après que l'unité de génération d'électricité (16) n'est plus dans l'état de fonctionnement prédéterminé ou au temps de fin de la deuxième période de charge.

6. Système de stockage d'électricité comprenant :
une pluralité de batteries de stockage (C1 à Cn) connectées en série avec une charge (16) et une unité de génération d'électricité (16) ;
une unité de dérivation (B1 à Bn) configurée pour contourner la batterie de stockage (C1 à Cn) ;
un capteur de courant (13) configuré pour détecter une valeur de courant de la charge (16) et de l'unité de génération d'électricité (16) ; et
le dispositif de contrôle de batterie de stockage selon la revendication 1.

7. Procédé de contrôle de batterie de stockage destiné à contrôler, à l'aide d'un ordinateur, un système de stockage d'électricité (10) comprenant une pluralité de batteries de stockage (C1 à Cn) connectées en série avec une charge ou une unité de génération d'électricité (16), une unité de dérivation (B1 à Bn) configurée pour contourner la batterie de stockage (C1 à Cn), un capteur de courant (13) configuré pour détecter une valeur de courant de la charge ou de l'unité de génération d'électricité (16), et un dispositif de contrôle (100), le procédé de contrôle de batterie de stockage comprenant :
durant une période au cours de laquelle une valeur de tension ou un état de charge de la batterie de stockage (C1 à Cn) en décharge est inférieur ou égal à une valeur seuil de décharge prédéterminée (V1), un premier processus de détection consistant à détecter un état de courant nul dans lequel la valeur de courant détectée par le capteur de courant (13) devient nulle, et un premier processus de dérivation consistant, en réponse à la détection de l'état de courant nul dans le premier processus de détection, à contourner, via l'unité de dérivation (B1 à Bn), une batterie de stockage (C1 à Cn) ayant une valeur de tension ou un état de charge inférieur ou égal à la valeur seuil de décharge prédéterminée (V1) ; ou
durant une période au cours de laquelle une valeur de tension ou un état de charge de la batterie de stockage (C1 à Cn) en charge est supérieur ou égal à une valeur seuil de charge prédéterminée (V1'), un deuxième processus de détection consistant à détecter l'état de courant nul, et un deuxième processus de dérivation consistant, en réponse à la détection de l'état de courant nul dans le deuxième processus de détection, à contourner, via l'unité de dérivation (B1 à Bn), une batterie de stockage (C1 à Cn) ayant une valeur de tension ou un état de charge supérieur ou égal à la valeur seuil de charge prédéterminée (V1').
